# EUROPÄISCHE PATENTSCHRIFT

(11) **EP 0 809 438 B1**
(45) Veröffentlichungstag und Bekanntmachung des Hinweises auf die Patenterteilung: **07.10.1998**
(21) Anmeldenummer: 95942054.8
(22) Anmeldetag: 29.12.1995
(51) Int. Cl.: A21C 3/02

(54) **VORRICHTUNG ZUR HERSTELLUNG VON TEIGBÄNDERN**
DEVICE FOR PRODUCING STRIPS OF DOUGH
DISPOSITIF PERMETTANT DE PRODUIRE DES BANDES DE PATE

(30) Priorität: 13.02.1995 DE 19504499
(43) Veröffentlichungstag der Anmeldung: 03.12.1997
(73) Patentinhaber: Dieter Sönnichsen Maschinen-und Stahlbau GmbH, 25712 Burg (DE)
(72) Erfinder: Sönnichsen, Dieter, 25712 Burg (DE)
(74) Vertreter: Trappenberg, Hans
(86) Internationale Anmeldenummer: DE9501878
(87) Internationale Veröffentlichungsnummer: WO9625046

(56) Entgegenhaltungen:
- EP-A- 0 179 645
- EP-A- 0 239 154

## Beschreibung

Die Erfindung betrifft eine Vorrichtung zum Herstellen von Teigbändern aus vorgegartem Teig nach dem Oberbegriff von Anspruch 1.

Eine solche Vorrichtung ist aus EP-A-0 239 154 bekannt.

Vorrichtungen zur Herstellung von Teigbändern weisen regelmäßig Zwei sich gegenüber angeordnete Walzen auf. Die Walzen sind in einem solchen Abstand voneinander angeordnet, daß sie sich bis auf einen Spalt gegenüberstehen. Eine vorbearbeitete Teigmasse wird derart den Walzen zugeführt, daß der Teig bei Drehung der Walzen in den Spalt eingezogen und auf Spaltdicke zusammengepreßt wird. Auf der anderen Seite der Walzen erhält man ein Teigband.

Durch die Preßbewegung wird die Struktur des Teigs jedoch stark beeinträchtigt, so daß der Teig bezüglich seiner Qualität nicht immer den an ihn gestellten Anforderungen entspricht. Darüber hinaus kann die Dicke des Teiges nur um eine relativ geringe Größe verringert werden.

Eine verbesserte Qualität soll durch eine aus einem Prospekt der Firma Rheon Automatic Machinery Co., LTD, Japan, "Theoretical Explanation of Stress free Stretcher", Februar 1991, bekannte Vorrichtung, bei der der Teig auf einem Förderband unter einer Andrückvorrichtung geführt wird, erreicht werden. Die Andrückvorrichtung weist drehbare Walzen auf, deren Achsen auf einem Oval bewegt werden können. Das Oval ist so angeordnet, daß eine seiner Längsseiten dem Förderband in einem Abstand gegenübersteht. Die Transportrichtung der Walzen entspricht der Bewegung des Förderbandes. Die Drehbewegung der Walzen ist derart, daß die Umfangsgeschwindigkeit der Walzen an der dem Förderband gegenüberliegenden Stelle der Geschwindigkeit der Walzenachsen entgegengesetzt ist. Der Teig wird durch die Walzen auf den Abstand der Walzen vom Förderband zusammengepreßt. Hierdurch soll sich eine Verbesserung der Struktur des Teigbandes ergeben. Die Qualität des Teigbandes ist jedoch immer noch nicht optimal.

Es ist Aufgabe der Erfindung, eine eingangs genannte Vorrichtung derart auszubilden, daß die Qualität eines Teigbandes verbessert wird.

Die Lösung dieser Aufgabe ergibt sich aus den Merkmalen des Anspruchs 1. Vorteilhafte Weiterbildungen der Erfindung ergeben sich aus den Unteransprüchen.

Durch die Erfindung wird erreicht, daß auf den Teig nicht kontinuierlich ein Druck ausgeübt wird, sondern zwischen Phasen der Druckausübung Phasen vorhanden sind, in denen sich der Teig durckfrei entspannen kann. Dies entspricht etwa einer Klopfbewegung. Durch eine derartige Behandlung des Teiges wird die innere Struktur des Teiges im wesentlichen unverändert aufrechterhalten, obgleich eine Verringerung der Dicke des Teiges um etwa den Faktor 10 erreicht werden kann.

Die ersten Walzen als auch die zweiten Walzen können gleichzeitig vom Antrieb der Transportvorrichtung beziehungsweise der Andrückvorrichtung angetrieben werden. Die Transportvorrichtung und die Andrückvorrichtung können zweckmäßigerweise einen gemeinsamen Antrieb haben. Hierdurch kann auf einfache Weise die synchrone Bewegung zwischen der Transportvorrichtung und der Andrückvorrichtung erreicht werden. In einem derartigen Fall ist eine Justiervorrichtung, mittels der die Stellung der Transportvorrichtung in Umfangsrichtung gegenüber der Stellung der Andrückvorrichtung in Umfangsrichtung verstellbar ist, wie dies eine besondere Ausführungsform der Erfindung vorsieht, sehr vorteilhaft.

Eine weitere vorteilhafte Ausführungsform der Erfindung sieht vor, daß am Umfang der Andrückvorrichtung eine unterschiedliche Anzahl von ersten Walzen gleichmäßig verteilt anordenbar ist. Hierdurch läßt sich die erfindungsgemäße Vorrichtung einfach an unterschiedliche Anforderungen anpassen. So kann auf einfache Weise erreicht werden, daß auf der Transportvorrichtung und/oder der Andrückvorrichtung weniger Walzen angeordnet sind, wodurch auf den Teig eine langsamere Klopfbewegung ausgeübt wird.

Um unterschiedlich dicke Teigbänder herstellen zu können, sieht eine weitere besondere Ausführungsform der Erfindung vor, daß die Transportvorrichtung und die Andrückvorrichtung gegeneinander verstellbar sind. Hierdurch kann auf einfache Weise der Abstand der Transportvorrichtung zur Andrückvorrichtung verändert werden. Die Verstellung kann dadurch erfolgen, daß eine oder beide Vorrichtungen auf die jeweils andere zubewegt wird beziehungsweise werden.

Eine weitere vorteilhafte Ausführungsform der Erfindung sieht vor, daß in Richtung der Transportrichtung gesehen hinter der Andrückvorrichtung eine drehbare Übergabewalze angeordnet ist, deren Umfangsgeschwindigkeit gleich oder größer ist als die Geschwindigkeit der zweiten Walzen der Transportvorrichtung an der der Andrückvorrichtung am nächsten gegenüberliegenden Stelle. Durch die Übergabewalze wird das Teigband, welches die erfindungsgemäße Vorrichtung durchlaufen hat, aufgefangen und kann durch eine Schleuderbewegung auf ein dahinter angeordnetes Transportband abgelegt werden.

In besonders vorteilhafter Weise ist vorgesehen, daß die Drehzahl der ersten Walzen und/oder der zweiten Walzen veränderbar ist. Hierdurch kann erreicht werden, daß die Oberfläche der Walzen an der Stelle, an der sich die Walzen am nächsten gegenüberstehen, eine Relativbewegung in Transportrichtung des Teigbandes oder gegen die Transportrichtung des Teigbandes haben. Die Geschwindigkeit kann auch so gewählt werden, daß die Relativgeschwindigkeit an der Stelle Null ist. Auch können die Geschwindigkeiten so gewählt werden, daß die Relativgeschwindigkeit der Oberfläche der Walzen an der Stelle unterschiedlich ist. Hierdurch kann auf die Oberflächenhaut des Teiges unterschiedlich eingewirkt werden. Die Struktur des Teiges kann dadurch ebenfalls stark beeinflußt werden.

Wenngleich sich die Erfindung auch auf vorgegarten Teig bezieht, so kann sie selbstverständlich auch bei anderen, teigähnlichen Materialien, insbesondere auch bei nicht vorgegartem Teig angewendet werden.

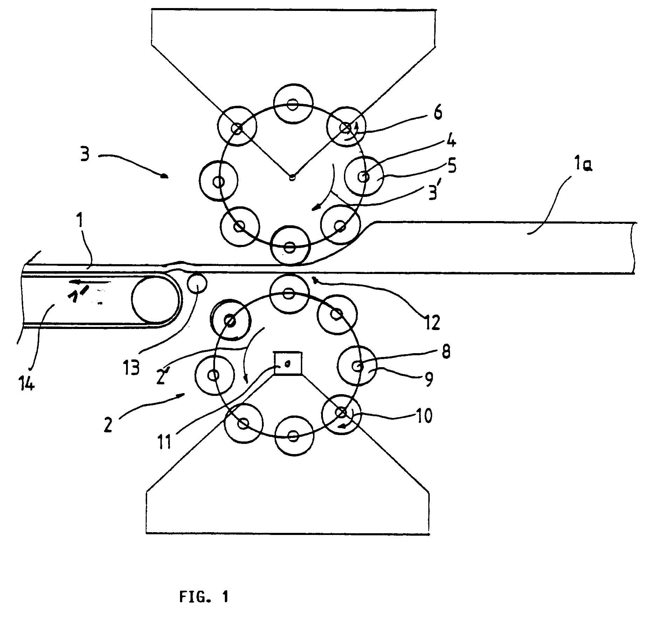

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine schematische Anordnung einer erfindungsgemäßen Vorrichtung.

Ein unbearbeiteter Teig 1a wird in einer relativ großen Dicke zwischen eine Transportvorrichtung 2 und eine Andrückvorrichtung 3 geführt. Die Andruckvorrichtung 3 ist eine Trommel, welche an ihrem Umfang erste Walzen 5 aufweist. Die Walzen 5 drehen sich um eine erste Nebenachse 4. Die Trommel 3 ist in einem Maschinengestell drehbar befestigt. Die Drehbewegung der Andrückvorrichtung 3 erfolgt in Richtung des Pfeils 3'.

Gegenüber der Andrückvorrichtung 3 ist eine Transportvorrichtung 2 angeordnet, welche ebenfalls als Trommel ausgebildet ist. Am Umfang der Trommel 2 befinden sich zweite Walzen 9, welche sich um eine zweite Nebenachse 8 drehen. Die Transportvorrichtung 2 ist wie die Andrückvorrichtung 3 drehbar in einem Maschinengestell befestigt. Die Drehrichtung der Trommel 2 wird durch den Pfeil 2' angezeigt. Die Trommel der Andrückvorrichtung 3 und die Trommel der Transportvorrichtung 2 werden von einem gemeinsamen, nicht gezeigten, Antrieb angetrieben. Die Stellung der beiden Trommeln 2, 3 in Umfangsrichtung zueinander kann durch eine Vorrichtung 11 verändert werden. Die Veränderung kann beispielsweise über bewegliche Kettenspanner erreicht werden, wenn die Trommeln mittels einer Kette angetrieben werden. Sie kann aber auch durch ein schrägverzahntes Zahnrad erreicht werden, in welches mehr oder weniger tief ein Antriebs-Zahnrad eingreift.

Die ersten Walzen 5 sind derart mit dem Antrieb der Trommel der Andrückvorrichtung 3 verbunden, daß zwischen der Drehung der ersten Walzen 5 und der Drehung der Trommel der Andrückvorrichtung 3 eine Zwangsbewegung erfolgt. Der Antrieb der zweiten Walzen 9 ist in gleicher Weise mit dem Antrieb der Trommel der Transportvorrichtung 2 verbunden, so daß die zweiten Walzen 9 ebenfalls durch eine Bewegung der Trommel der Transportvorrichtung 2 angetrieben werden. Hierdurch bewegen sich die ersten Walzen 5 und die zweiten Walzen 9 sowie die Trommel der Andrückvorrichtung 3 und die Trommel der Transportvorrichtung 2 synchron zueinander. Sollte es jedoch zweckmäßig sein, können die Trommeln 2, 3 beziehungsweise die Walzen 5, 9 unabhängig voneinander angetrieben werden. Die Drehrichtung der ersten Walzen 5 wird durch den Pfeil 6 angezeigt, die Drehrichtung der zweiten Walzen 9 durch den Pfeil 10.

Der Antrieb der ersten Walzen 5 und der zweiten Walzen 9 ist so ausgebildet, daß die Relativbewegung an der Stelle 12, an der sich die Walzen am nächsten gegenüberstehen, der Transportrichtung 1' des Teigbandes entspricht. Die Geschwindigkeit kann auch so eingestellt sein, daß die Relativgeschwindigkeit an der Stelle 12 Null ist oder geringfügig gegen die Transportrichtung 1' des Teigbandes 1 wirkt. Durch das Ausdünnen des Teiges 1a wird dann dennoch Teig 1a in Richtung 1' durch die Vorrichtung transportiert. Das durch die Ausdünnung erhaltene Teigband 1 wird von einer unmittelbar hinter der Stelle 12 angeordneten schnellaufenden Übergabewalze 13 aufgefangen. Durch die Drehbewegung der Übergabewalze 13 wird das Teigband 1 hochgeschleudert, wodurch es auf ein in Transportrichtung 1' des Teigbandes 1 gesehen angeordnetes Transportband 14 abgelegt wird. Die Trommel der Andrückvorrichtung 3 sowie die Trommel der Transportvorrichtung 2 sind so im Maschinengestell befestigt, daß sie aufeinander zu bewegt werden können.

## Patentansprüche

1. Vorrichtung zum Herstellen von Teigbändern (1) aus vorgegartem Teig (1a), mit einer Transportvorrichtung (2) zum Transport des Teiges (1, 1a), mit einer in Transportrichtung (1') beweglichen (3') Andrückvorrichtung (3), welche der Transportvorrichtung (2) gegenüber angeordnet ist, wobei die Andrückvorrichtung (3) erste, jeweils um eine erste Nebenachse (4) drehbare Walzen (5) aufweist, welche am Umfang der Andrückvorrichtung (3) angeordnet sind und sich mit dem Umfang der Andrückvorrichtung (3) in Transportrichtung (1') bewegen (3'), wobei die Umfangsgeschwindigkeit (6) der ersten Walzen (5) an der der Transportvorrichtung (2) zugewandten Stelle (12) der Umfangsgeschwindigkeit (3') der Andrückvorrichtung (3) entgegengesetzt ist, wobei die Transportvorrichtung (2) zweite, jeweils um eine zweite Nebenachse (8) drehbare Walzen (9) aufweist, welche am Umfang der Transportvorrichtung (2) angeordnet sind, wobei die Umfangsgeschwindigkeit (10) der zweiten Walzen (9) an der der Andrückvorrichtung (3) zugewandten Stelle (12) der Umfangsgeschwindigkeit (2') der Transportvorrichtung (2) entgegengesetzt ist,
dadurch gekennzeichnet,
daß die Transportvorrichtung (2) und die Andrückvorrichtung (3) synchron zueinander bewegbar sind, wobei die Stellung der Andrückvorrichtung (3) und der Transportvorrichtung (2) derart zueinander ist, daß sich jeweils eine erste (5) und eine zweite (9) Walze gegenüberstehen.

2. Vorrichtung nach Anspruch 1,
dadurch gekennzeichnet,
daß am Umfang der Andrückvorrichtung (3) eine unterschiedliche Anzahl von ersten Walzen (5) gleichmäßig verteilt anordenbar ist.

3. Vorrichtung nach Anspruch 1 oder 2,
dadurch gekennzeichnet,
daß am Umfang der Transportvorrichtung (2) eine unterschiedliche Anzahl von zweiten Walzen (9) gleichmäßig verteilt anordenbar ist.

4. Vorrichtung nach einem
der Ansprüche 1 bis 3,
dadurch gekennzeichnet,
daß die Transportvorrichtung (2) und die Andruckvorrichtung (3) gegeneinander verstellbar sind.

5. Vorrichtung nach einem
der Ansprüche 1 bis 4,
dadurch gekennzeichnet,
daß in Richtung der Transportrichtung (1') gesehen hinter der Andrückvorrichtung (3) eine drehbare Übergabewalze (13) angeordnet ist, deren Umfangsgeschwindigkeit gleich oder größer ist als die Relativbewegung der Oberfläche der zweiten Walzen (9) der Transportvorrichtung (2) an der der Andrückvorrichtung (3) zugewandten Stelle (12) ist.

6. Vorrichtung nach einem
der Ansprüche 1 bis 5,
dadurch gekennzeichnet,
daß die Drehzahl der ersten Walzen (5) und der zweiten Walzen (9) frei veränderbar ist.

7. Vorrichtung nach einem
der Ansprüche 1 bis 6,
dadurch gekennzeichnet,
daß eine Justiervorrichtung (11) vorgesehen ist, mittels der die Stellung der Transportvorrichtung (2) in Umfangsrichtung (2') gegenüber der Stellung der Andrückvorrichtung (3) in Umfangsrichtung (3') verstellbar ist.

## Claims

1. Apparatus for producing dough strips (1) from pre-prepared dough (1a), comprising a transport device (2) for transporting the dough (1, 1a), and a pressing device (3) which is movable (3') in the transport direction (1') and which is arranged opposite the transport device (2), wherein the pressing device (3) has first rollers (5) which are each rotatable about a respective first secondary axis (4) and which are arranged at the periphery of the pressing device (3) and which move (3') with the periphery of the pressing device (3) in the transport direction (1'), wherein the peripheral speed (6) of the first rollers (5) at the location (12) towards the transport device (2) is opposite to the peripheral speed (3') of the pressing device (3), wherein the transport device (2) has second rollers (9) which are each rotatable about a respective second secondary axis (8) and which are arranged at the periphery of the transport device (2), wherein the peripheral speed (10) of the second rollers (9) at the location (12) towards the pressing device (3) is opposite to the peripheral speed (2') of the transport device (2), characterised in that the transport device (2) and the pressing device (3) are movable synchronously relative to each other, wherein the position of the pressing device (3) and of the transport device (2) is relative to each other such that a first roller (5) and a second roller (9) are respectively disposed opposite each other.

2. Apparatus according to claim 1 characterised in that a different number of first rollers (5) can be arranged in uniformly distributed fashion at the periphery of the pressing device (3).

3. Apparatus according to claim 1 or claim 2 characterised in that a different number of second rollers (9) can be arranged in uniformly distributed fashion at the periphery of the transport device (2).

4. Apparatus according to one of claims 1 to 3 characterised in that the transport device (2) and the pressing device (3) are adjustable relative to each other.

5. Apparatus according to one of claims 1 to 4 characterised in that arranged downstream of the pressing device (3) as viewed in the direction of the transport direction (1') is a rotatable transfer roller (13) whose peripheral speed is equal to or higher than the relative movement of the surface of the second rollers (9) of the transport device (2) at the location (12) towards the pressing device (3).

6. Apparatus according to one of claims 1 to 5 characterised in that the speed of rotation of the first rollers (5) and the second rollers (9) is freely variable.

7. Apparatus according to one of claims 1 to 6 characterised in that there is provided an adjusting device (11), by means of which the position of the transport device (2) is adjustable in the peripheral direction (2') relative to the position of the pressing device (3) in the peripheral direction (3').

## Revendications

1. Dispositif pour produire des bandes de pâte (1) à partir de pâte alimentaire précuite (1a), comprenant un dispositif de transport (2) pour transporter la pâte (1, 1a), un dispositif de pressage (3), déplaçable (3')dans la direction de transport (1'), qui est placé en face du dispositif de transport (2), le dispositif de pressage (3) comportant des premiers cylindres (5), pouvant tourner chacun autour d'un premier axe additionnel (4), qui sont agencés à la périphérie du dispositif de pressage (3) et se déplacent (3') conjointement avec la périphérie du dispositif de pressage (3) dans la direction de transport (1'), la vitesse circonférentielle (6) des premiers cylindres (5) étant de sens contraire, à l'endroit (12) dirigé vers le dispositif de transport (2), à la vitesse circonférentielle (3') du dispositif de pressage (3), le dispositif de transport (2) comportant des seconds cylindres rotatifs (9), pouvant tourner chacun autour d'un second axe additionnel (8), qui sont agencés à la périphérie du dispositif de transport (2), la vitesse circonférentielle (10) des seconds cylindres (9) étant de sens contraire, à l'endroit (12) dirigé vers le dispositif de pressage (3), à la vitesse circonférentielle (2') du dispositif de transport (2), caractérisé en ce que le dispositif de transport (2) et le dispositif de pressage (3) peuvent être animés de mouvements synchrones entre eux, la position relative du dispositif de pressage (3) et du dispositif de transport (2) étant telle qu'un premier cylindre (5) et un second cylindre (9) se trouvent chaque fois l'un en face de l'autre.

2. Dispositif selon la revendication 1, caractérisé en ce qu'un nombre variable de premiers cylindres (5) peut être réparti uniformément à la périphérie du dispositif de pressage (3).

3. Dispositif selon la revendication 1 ou 2, caractérisé en ce qu'un nombre variable de seconds cylindres (9) peut être réparti uniformément à la périphérie du dispositif de transport (2).

4. Dispositif selon une des revendications 1 à 3, caractérisé en ce que le dispositif de transport (2) et le dispositif de pressage (3) sont réglables en position l'un par rapport à l'autre.

5. Dispositif selon une des revendications 1 à 4, caractérisé en ce qu'un cylindre rotatif de transfert (13) est installé derrière le dispositif de pressage (3) dans la direction de transport (1'), cylindre dont la vitesse circonférentielle est égale ou supérieure au mouvement relatif de la surface des seconds cylindres (9) du dispositif de transport (2) à l'endroit (12) dirigé vers le dispositif de pressage (3).

6. Dispositif selon une des revendications 1 à 5, caractérisé en ce que la vitesse de rotation des premiers cylindres (5) et des seconds cylindres (9) peut être variée librement.

7. Dispositif selon une des revendications 1 à 6, caractérisé en ce qu'il comprend un dispositif de réglage (11) au moyen duquel la position du dispositif de transport (2) dans la direction circonférentielle (2') peut être changée par rapport à la position du dispositif de pressage (3) dans la direction circonférentielle (3').
